# EUROPEAN PATENT APPLICATION

(11) **EP 1 522 354 A1**
(43) Date of publication of application: **13.04.2005**
(21) Application number: 03292460.7
(22) Date of filing: 06.10.2003
(51) Int. Cl.: B09B 3/00, C05F 17/00, A23K 3/00

(54) **Microbial degradation of animal flours.**

(71) Applicant: INSTITUT NATIONAL DE LA SANTE ET DE LA RECHERCHE MEDICALE (INSERM), 75654 Paris Cédex 13 (FR)
(72) Inventor: Kohler, Stephan, 34980 Saint Clément de Rivière (FR); Foulquier, Elodie, Colline de Saint Priest, 34090 Montpellier (FR); Liautard, Jean-Pierre, 34110 Mireval (FR)
(74) Representative: Casalonga, Axel

(57) **Abstract**

The present invention relates to a method for the degradation of animal flours taking into account the possible contamination with the agent for BSE (bovine spongiform encephalopathy).

## Description

The present invention relates to a method for the degradation of animal flours taking into account the possible contamination with the agent for BSE (bovine spongiform encephalopathy).

The animals dead in cowshed were desiccated together with the slaughtering waste and were turned into flours used for feeding animals. These flours are obtained by thermal treatment of animals and they are largely diffused because of their low cost and their efficiency in increasing cattle's bodily mass.

In order to increase the production of meat, livestock was fed by fodder containing animal flour and the disease was spread. Having established the ineffectiveness of sterilizing heat treatment, the health authorities then decided to prohibit the use of animal flour and waste of animal flour in fodders. But the possibility that BSE spreads by means of contaminated flours induced authorities to pass urgent measures in order to stop the spreading. Today, these feeds cannot be used for feeding cattle anymore.

Following the provisions adopted by the authorities, enormous quantities of waste have been created, the destruction of which causes problems of an operational and economic nature. There is an urgent need to dispose of these animal flours potentially contaminated by prion proteins.

Prion diseases are often called spongiform encephalopathies. The most well known diseases of this type are scrapie and BSE (bovine spongiform encephalopathy) which sheep and cattle are subject to respectively. Diseases of the same type that affect other mammals are also known. The most well known forms in humans are CJD (Creuzfeld-Jacob Disease) and FFI (Fatal Familial Insomnia).

This specific infectious disease can be transmitted by a single simple protein molecule with no genome. It is a simple protein nonetheless capable of causing modifications in the aggregation form of the living matter. This protein was called prion and is indicated as PrP from the abbreviation of prion protein.

The cause of the disease transmitted by prions was not to be found in the composition or sequence of the amino acids forming the prion protein itself, but in the spatial form in which the atoms are structured in the molecule. Although maintaining the same chemical composition, the prion can have two forms, which differ only in structure. The first principal and stable form has the same regular helical structure as all normal proteins, in this case the protein of the prion is innocuous and is indicated with the initials PrP^{c} (common or cellular prion). A second form differs slightly from the principal form. In this case, the protein is distinguished with the initials PrP^{Sc} (scrapie prion). There is no detectable difference in the amino acid sequence of the two forms.

A prion cannot be modified by heat conventional sterilization procedures or by ionizing, radiation, ultraviolet radiation and in general, treatments capable of degrading DNA or RNA to cause the death of the pathogenic spores or organisms.

Several approaches have been used for destroying and eradicating the pathogens of prion diseases. WO200249449 discloses chemical breakdown of the proteins with acids or bases with optionally proteases like trypsin, chemotrypsin, elastase...). DE-A-10061494 discloses an irradiation of the entire mass of meat wastes with electron beam, to assure reliable destruction of prions. FR-A-2817121 discloses a method of treatment of animal flours especially to destroy prions comprising oxidation and acidification with a mixture of nitrogen oxide, air and steam. EP-A-1269866 relates to a treatment of proteinaceous material suspected to contain prions molecules, encompassing use of heat and cycles of electrical charges and discharges. WO200239826 discloses a method of producing animal feed free from transmissible degenerative encephalopathies using an alkali treatment at a pH of at least 8,5. US-A-2002172989 relates to a method for destruction of infectious prion proteins in a tissue by thermal/enzymatic treatment of the tissue with a prion-destructive protease.

The slaughtering wastes that represented a source of animal flours are now also a problem. To get rid of these flours, some people decided to incinerate them in cement kilns. However, the destruction of theses wastes leads to poor quality cements. Moreover, the capacities, in particular for the incineration of low-risk flours, are entirely insufficient.

Studies on the bacteria *Bacillus subtilis* show that this bacteria is able to growth with fish flour as whole substrate to produce high quantities of proteases (Ellouz *et al.,* **2001,** Production of protease by *Bacillus subtilis* grown on sardinelle heads and viscera flour, *Bioresource Technology,* pp49-51)

The aim is to dispose of the huge stocks of animal flour and degrade them in order to reduce their mass, keeping in mind the possible contamination of these products. It is therefore a difficult task because of the constraints imposed by the risk of spreading the prion disease possibly present in these flours.

The inventors found that the proteases secreted by the microorganisms while they are being cultured can not only degrade the organic matter contained in the animal flours, but also induce the proteolysis of the PrP^{Sc} prion protein, contained in ground infected ovine brain materials and responsible for spongiform encephalopathies.

The invention pertains to the degradation, by a biological method, of the low-risk animal flours stored for destruction in particular in European countries, but also of any other type of animal-based waste in countries which do not have the infrastructure necessary for the incineration of this waste.

Other subjects will become apparent on reading the description and examples, which are not restricted and with reference to the following drawings:
- FIG1:: Growth curve of *Bacillus subtilis* (OD₆₀₀) with flours, and degradation of flours in the dialysis tubing
- FIG2:: Digestion of PrP^{Sc} with *Bacillus subtilis* after 30 days of culture
1: PrP^{Sc} in water 2: PrP^{Sc} in 2YT medium
3: PrP^{Sc} in water:flours T: PrP^{Sc} without *B. subtilis* (negative control)
- FIG3:: Growth curve of *E. album* with flours in water or in the specific medium for this fungus, and degradation of flours in the dialysis tubing
- FIG4:: Digestion of PrP^{Sc} with *E. album* after 4 days of culture
1: specific medium for proteases production
2: medium with 3% of malt
3: medium with 3% of malt and lysis buffer
T: PrP^{Sc}: control-culture without fungus
- FIG5:: Digestion of prion protein BSE by *B.subtilis* with time
1: PrP^{Sc} (BSE) + 2YT medium
2: PrP^{Sc} (BSE) + water
T: PrP^{Sc} (BSE) + water (without *B.subtilis*)
Experiments are revealed with an antibody 12F10, mouse IgG2a (SPI BIO) which recognizes region 142-160 of prion protein.
- FIG 6:: Digestion of prion protein BSE by *Engyodontium album limber* after T = 4 days
1: PrP^{Sc} (BSE) + specific medium for protease production
2: PrP^{Sc} (BSE) + medium malt 3%
T: PrP^{Sc} (BSE) + water (without *Engyodontium album*)
Experiments are revealed with an antibody 12F10, mouse IgG2a (SPI BIO) which recognizes region 142-160 of prion protein.
At T = 0, the three forms of prion protein can be seen (non glycosylated, monoglycosylated and diglycosylated)

The subject matter of the invention is a method of treatment of animal flours potentially contaminated with the prion protein PrP^{Sc}, consisting in growing on these flours a micro-organism able to use the flours as whole substrate to degrade organic material and to lyse the prion protein PrP^{Sc}.

Accordingly to this invention, the micro-organism can be a bacterium or a fungus. Such micro-organisms are able to produce and release proteases in the culture medium when grown on a suitable substrate.

These micro-organisms are able to use animal flours as whole organic substrate to grow. While they degrade the flours, they secrete large amounts of exoproteases able to digest both the flours and the infectious agent.

The ensured biodegradation of the prion protein will remove any potential infectious risk in animal flours residues and will guarantee additional safety during the final storage of the residues of inorganic origin present in the flours. This allows conversion of the organic mass of animal flours to a biological mass of non-pathogenic agents, which are ubiquitous in the environment.

Different strains of bacteria may be used for this purpose. A preferred embodiment is the use of a *Bacillus,* and preferably a *Bacillus subtilis.*

Among the strains of this bacterium, strains A168 and A179 are more particularly preferred.

These strains of *Bacillus subtilis* A179 (mutant *hpr*: which excretes high amounts of proteases, Higerd *et al.,* Hyperprotease-producing mutants of *Bacillus subtilis.* 1972, *J. Bacteriol*.**112**: 1026-1028 and Perego & Hoch, Sequence analysis and regulation of the hpr locus, a regulatory gene for protease production and sporulation in *Bacillus subtilis.* 1988, *J. Bacteriol.* **170:** 2560-2567) and A168 (CIP: 106309) originate respectively from the Institute of Microbiology of the University of Würzburg (Germany) and from the collection of strains of the Pasteur Institute (Paris).

Different strains of fungus may also be used for the degradation of animal flours. The micro-organism *Engyodontium* is especially preferred and more especially the strain *Engyodontium album* formerly *Tritirachium album.*

This organism is the natural producer of proteinase K, known for its large capacities for relatively non-specific degradation of proteins. Like *B. subtilis,* this fungus is naturally widespread, and it is not pathogenic for humans.

The *Engyodontium album* strain originates from the Scientific Institute of Public Health (BCCM) in Belgium (ATCC: 22563, MCUL: 1060).

The animal flours to be degraded may be of variable origins but preferentially, the animal flours according to the invention are meat and bone flours.

The originality of the invention lies in the use of microorganisms capable of secreting large amounts of active exoproteases into the culture medium, while at the same time using the animal flours as the only organic substrate (source of carbon and of nitrogen).

Using the method according to the invention, weight of flours is reduced by 80% following the growth of the micro-organism. Organic material is indeed degraded and the waste of flours after growth of the micro-organism is constituted of mineral waste coming from bones.

Degradation of the flours by the microorganisms in question can be envisaged in centers of the purification plant type, or in industrial systems of the very large capacity fermenter type.

The examples, which follow, are intended to illustrate the invention without, however, being limiting in nature.

### Example 1: Quantification of protease secretion in B. subtilis

The presence of exoproteases in the *B. subtilis*/animal flours supernatant has been demonstrated, at 50 h of culture. The "EnzChek" reagents (Molecular Probes) containing, as substrate, casein labeled with a red fluorochrome has been used (Bodipy TR-X) which releases the fluorescence only when it is degraded.

Briefly, to determine the range of enzyme activity, three serial dilutions (1, 1/10 and 1/100) of trypsin in the 1x reaction buffer have been prepared. To detect enzyme activity in the sample of *B. subtilis* supernatants, 100µl of the sample are diluted with 1x digestion buffer. 100 µl of the Bodipy TR-X casein substrate are added to each sample and incubated for one hour in the dark. The fluorescence is measured using a fluorescence microplate reader (GEMINI, Molecular Devices). Bodipy TR-X dye-labeled peptides have excitation/emission maxima of approximately 589/617nm respectively. A kinetic study is performed for 1 hour with measurements every 5 minutes. Trypsin, which degrades the same substrate, was used as a positive control.

A protease activity can be demonstrated in the *B. subtilis* culture supernatant equivalent to 12 000 U trypsin/ml.

### Example 2. Flour degradation by Bacillus subtilis A179:

The low-risk animal flours are kindly provided by the company FERSO BIO (Agen). The strain of *Bacillus subtilis* A179 (mutant *hpr*:) originates from the Institute of Microbiology of the University of Würzburg (Germany).

The flours (made of meat and bone) used are weighed and then enclosed in dialysis tubing (cutoff 100 kDa) in order to then be autoclaved in a flask containing the appropriate medium. The meal concentration used for the degradation experiments is 10 g/l.

2 ml of a preculture of the A179 strain in 2xYT medium at 37°C in the stationary phase are added to 500 ml of sterile water contained in the flask with the dialysis tubing containing the flours. The culture is placed in an incubator at 30°C (180 rpm) for one week. The bacterial proteases can thus reach the proteins in the dialysis tubing and digest them. The degradation peptides diffuse out of the dialysis bag and feed the bacteria. A growth curve for *B. subtilis* is effected in the course of the flour degradation, and the wet weight of the flours is determined before and at the end of the experiment.

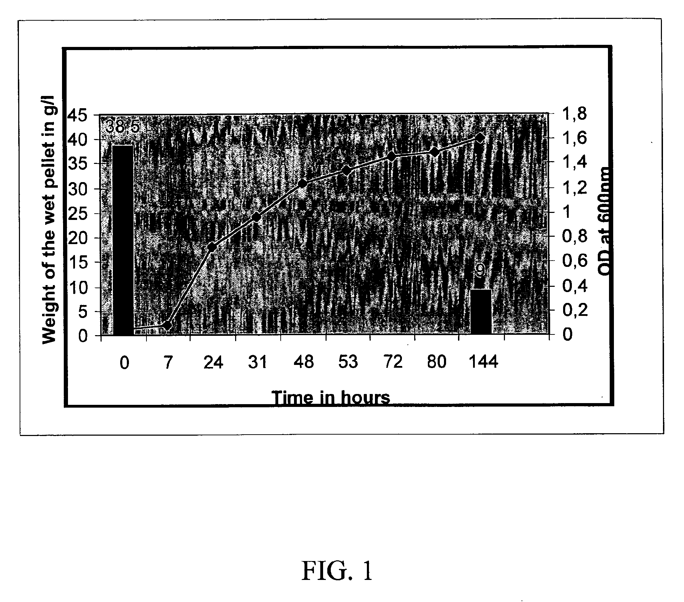

The degradation of the flours with the *B. subtilis* strain A179, which overproduces exoproteases, clearly shows that *B. subtilis* is capable of using animal flours as the only growth substrate. The experimental system using the dialysis tubing allowed us to differentiate the bacterial growth from the flour degradation. The optical density (OD) and also the concentration of viable bacteria increase constantly: a factor of 4.5 for the OD and 10³ for the number of bacteria over a period of 6 days (see figure 1). The wet weight of the sediment decreases to reach approximately 20% of the initial weight of the flours, which corresponds to the weight of the mineral matter residues (measured by conversion to ash).

### Example 3: Flour degradation by Engyodontium album Limber:

The *Engyodontium album* strain, formerly *Tritirachium album,* originates from the Scientific Institute of Public Health (BCCM) in Belgium (ATCC: 22563, MCUL: 1060).

In the same way as in example 2, a preculture of this fungus is prepared 48 h before the experiment. The dialysis tubing containing the flours are placed either in the medium specific for the production of proteases or in sterile water.

100 ml of medium are seeded at 1/10 with the culture of fungus, and the culture flask is placed in an incubator at 30°C (180 rpm) for two weeks. 10 ml of fungal culture are removed during the experiment and then centrifuged at 4000 g/10 min. The pellets containing the fungus are dehydrated and weighed, and the wet weight of the flours is determined before and at the end of the experiment.

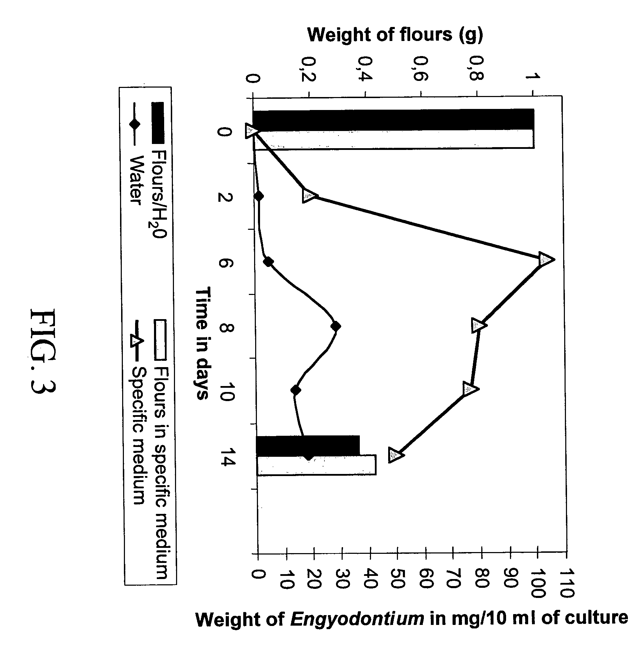

The degradation of the flours by *Engyodontium album* is less considerable than that obtained with the bacteria. The weight of the flours decreases to reach 35-40% (specific medium) of the initial weight, over a period of 14 days. In addition, the growth of the fungi exhibits a rapid (3-6 days for 100 mg of solids) but short exponential phase. A constant decrease in the concentration of fungal solids is observed after 3-6 days, indicating autolysis of the microorganism (see figure 3).

### Example 4: Degradation of the sheep scrapie protein (PrP^{Sc}) by B. subtilis A179

The brains from sheep suffering from natural scrapie are provided by the Ecole Vétérinaire [Veterinary School] of Toulouse.

The mesencephalon of the sheep brain naturally infected with the scrapie agent is cut up and then ground in one volume of PBS so as to obtain a 100% homogenate.

The homogenate is then treated with 70% ethanol for 16 h in order to disinfect it. The composition is thereafter washed twice with NaCl (0.9%) in order to remove the ethanol. The resulting homogenate is suspended in one volume of 0.9% NaCl and is treated in a sonicator for 1 min at maximum power in order to destroy all the possible aggregates due to the ethanol used.

The culture medium composed of water with 1% flour is prepared for digestion of the prion protein by *B. subtilis.*

2 ml of *B. subtilis* culture in the stationary phase are added to 10 ml of culture medium, as are 200 µl of brain homogenate. The culture is placed in an incubator at 30°C (180 rpm) for 30 days. Samples are taken at 7, 14, 20 and 30 days in order to follow the degradation of the prion protein.

After precipitation of the entire sample with TCA, the PrP^{Sc} prion protein (infectious form) is detected by Western blotting as follows:

Nine volumes of samples are precipitated with 1 vol of trichloroacetic acid for 1 h on ice. After two washes with glacial acetone (5 minutes at 13 000 rpm), the pellet is dried and then resuspended in 100 *µ*l of water.

40 *µ*l of Laemmli buffer are added to each sample before being heated at 100°C for 10 minutes. 140 *µ*l of sample per well are loaded onto a 16% acrylamide gel. After transfer onto a nitrocellulose membrane, the membrane is incubated with the first antibody, SAF61, mouse IgG2a (SPI BIO), for 2 hours at ambient temperature with shaking. This antibody recognizes region 142-160 of the prion protein. The membrane is then incubated with the secondary antibody labelled with HPR (horseradish peroxidase) for 30 minutes at ambient temperature. The prion protein is detected by chemiluminescence (*ECL*), with a developing time of 15 minutes.

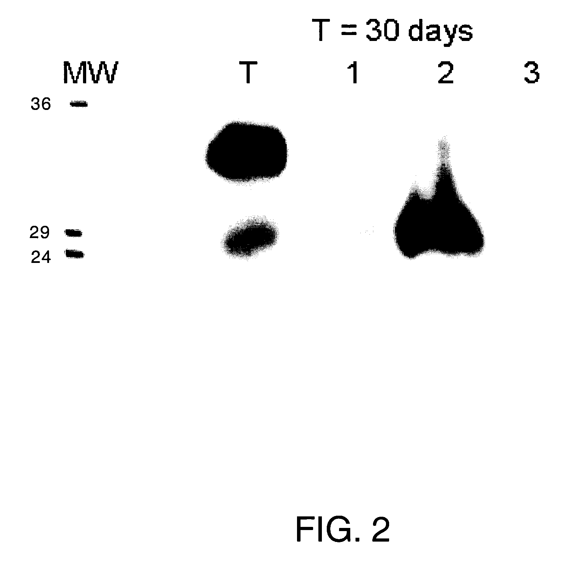

At 30 days, a large amount of PrP^{Sc} has been degraded (see figure 2); however, traces of the protein remain detectable with SAF-61

Under the culture conditions established with the cellular form of the PrP, the experiments with the infected brains demonstrated that a *B. subtilis* culture degraded the scrapie form of the prion protein after 30 days of incubation in the water/meal medium. In addition, in this mixture, the bacterial growth is of the order of 10⁸ CFU/ml for a minimum of 20 days.

### Example 5: Degradation of the sheep scrapie protein (PrP^{Sc}) by Engyodontium album Limber

The digestion of the prion protein with *Engyodontium album* is carried out in the medium specific for the production of proteases or in medium containing 3% of malt, or in a medium containing a mixture of water and flours (1% FVO).

1 ml of *Engyodontium album* culture is added to 10 ml of culture medium, as are 200 *µ*l of brain homogenate. The incubation is carried out at 30°C (180 rpm) for two weeks. Samples are taken at 4, 7, 10 and 15 days in order to follow the degradation of the prion protein.

An *Engyodontium album* culture mixed with a homogenate of brain infected with the scrapie protein demonstrates, after only 4 days of culturing in the medium flours/H₂O (1 %), that the infectious form is completely degraded. A precipitation of 5 ml of culture is carried out after 17 days in order to verify that degradation of the protein is complete.

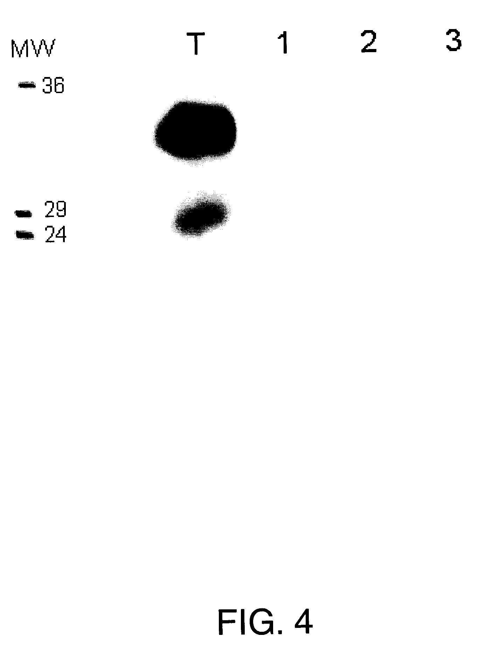

The results obtained in experiments identical to those described above for B. *subtilis* show that, at the end of a culturing period of 14 days in various types of suitable media, approximately 35-40% of the initial mass of animal flours remains. The flour degradation would therefore appear to be a little less efficient and less rapid than with *B. subtilis.* On the other hand, the degradation of PrP^{Sc} after the addition of infected sheep brain extract is quantitative and much more rapid in the presence of *Engyodontium album.* As early as 4 days of culturing in the medium flours/H₂O (1%), the infectious form of the prion protein is no longer detectable by Western blotting (see figure 4).

### Example 6 : Degradation of the bovine spongiform encephalopathy protein by B.subtilis

The brain from bovine infected by the agent of bovine spongiform encephalopathy (BSE) is provided by the AFSSA of Lyon (Agence Française de Sécurité Sanitaire des Aliments).

The mesencephalon of the infected bovine brain is cut up and then ground in one volume of PBS so as to obtain a 100% homogenate.

The homogenate is then treated with 70% ethanol for 16h in order to disinfect it. The composition is thereafter washed twice with NaCl (0.9%) in order to remove the ethanol. The resulting homogenate is suspended in one volume of 0.9% NaCl.

The culture medium composed of water or medium 2YT is prepared for digestion of the BSE prion protein by *B.subtilis.*

2 ml of *B.subtilis* culture in stationary phase are added to 10 ml of culture medium, and 200 µl of brain homogenate. The culture is placed in an incubator at 30°C (180 rpm) for 30 days. Samples are taken at 7, 15, 30 days in order to follow the degradation of the BSE prion protein.

Following polyacrylamide gel electrophoresis and Western blotting, the membrane is incubated with the selective antibody, 12F10, mouse IgG2a (SPI-BIO), for 2 hours at ambient temperature with shaking.

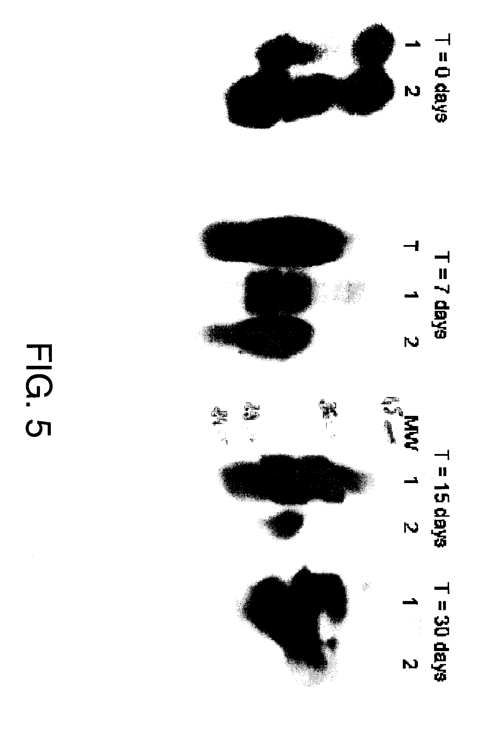

At 30 days, a large amount of BSE prion protein has been degraded (see figure 5). However, traces of the protein remain detectable with 12F10 antibody.

The experiments with the infected bovine brain demonstrated that a *B.subtilis* culture degraded the BSE prion protein after 30 days of incubation in the water/brain medium.

### Example 7: Degradation of the bovine spongiform encephalopathy prion protein by Engyodontium album

The digestion of the BSE prion protein with *Engyodontium album* is carried out in two different media; medium specific for the production of protease, or malt 3% for the growth of fungi.

1 ml of *Engyodontium album* culture is added to 10 ml of culture medium, and 200 µl of brain homogenate. The incubation is carried out at 30°C (180 rpm) for two weeks. Samples are taken at 0, 4, 7 and 15 days in order to follow the degradation of the BSE prion protein and treated as in the precedent example.

An *Engyodontium album* culture mixed with a homogenate of brain infected with the ESB prion protein demonstrates, after only 4 days of culture, that the infectious form is completely degraded. A precipitation of 5 ml of culture is carried out after 17 days in order to verify that degradation of the protein is complete.

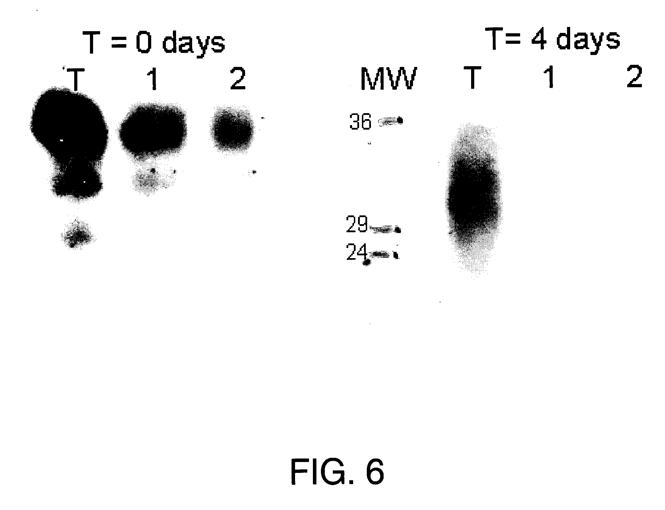

The degradation of BSE prion protein after the addition of infected bovine brain extract is quantitative and much more rapid in the presence of *Engyodontium album.* After as early as 4 days of culture, the BSE prion protein is no longer detectable by Western blotting (see Figure 6).

## Claims

1. A method of treatment of animal flours potentially contaminated with the prion protein PrP^{Sc}, consisting in growing on these flours a micro-organism able to use the flours as whole substrate to degrade organic material and to lyse the prion protein PrP^{Sc}.

2. A method according to claim 1, wherein the micro-organism is able to produce proteases in the medium.

3. A method according to claim 1 or 2, wherein the micro-organism is a bacterium.

4. A method according to claim 3, wherein the micro-organism is a *Bacillus.*

5. A method according to claim 4, wherein the *Bacillus* is a *Bacillus subtilis.*

6. A method according to claim 5, wherein the *Bacillus* is *Bacillus subtilis A179.*

7. A method according to claim 5, wherein the *Bacillus* is *Bacillus subtilis A168.*

8. A method according to claim 1 or 2, wherein the micro-organism is a fungus.

9. A method according to claim 8, wherein the micro-organism is a *Engyodontium.*

10. A method according to claim 9, wherein the micro-organism is *Engyodontium album.*

11. A method according to anyone of the previous claims, wherein animal flours are meat and bone flours.

12. A method according to anyone of the previous claims, wherein weight of flours is reduced by 80% following the growth of the micro-organism

13. A method according to anyone of the previous claims, wherein the waste of flours after growth of the micro-organism is constituted of mineral waste.
